# EUROPEAN PATENT SPECIFICATION

(11) **EP 2 164 219 B1**
(45) Date of publication and mention of the grant of the patent: **07.02.2018**
(21) Application number: 08850120.0
(22) Date of filing: 08.10.2008
(51) Int. Cl.: H04L 29/00, G06F 9/445

(54) **DEVICE FOR PROVIDING BUILT-IN BROADBAND DIAL-UP FUNCTION**
VORRICHTUNG ZUR BEREITSTELLUNG EINER INTEGRIERTEN BREITBAND-DIAL-UP-FUNKTION
DISPOSITIF FOURNISSANT UNE FONCTION INTEGREE D'ACCES COMMUTE A LARGE BANDE

(30) Priority: 25.10.2007 CN 200720173813 U
(43) Date of publication of application: 17.03.2010
(73) Proprietor: Huawei Device Co., Ltd., Longgang District Shenzhen Guangdong 518129 (CN)
(72) Inventor: HUA, Jin, Shenzhen Guangdong 518129 (CN); WANG, Hongbin, Shenzhen Guangdong 518129 (CN)
(74) Representative: Körber, Martin Hans
(86) International application number: PCT/CN2008/072618
(87) International publication number: WO 2009/062434

(56) References cited:
- WO-A1-01/93048
- CN-A- 1 267 985
- CN-A- 1 343 917
- CN-Y- 201 114 141
- JP-A- 2003 150 530
- US-A1- 2005 278 461

## Description

### FIELD OF THE TECHNOLOGY

The present invention relates to the field of network communication, and more particularly to a device with a built-in broadband dial-up function.

### BACKGROUND

With the popularization of broadband access and Internet applications, recently, more and more home subscribers have subscribed for a broadband network access service. However, in rent lodging houses, undergraduate dormitories, and dormitories for large-scale enterprise, as well as other regions with a high people turnover rate, many people share one telephone line interface to get access to the network, so problems about personal account number and roaming usage need to be solved to meet the demand for broadband network access at any time any where. In order to increase the utilization rate of the broadband network in such regions, operators have proposed a card number service, in which a broadband account number is personalized and mobilized. The card has a broadband account number, which has a roaming function, a timing function, a charging function, and a paying function through a prepaid manner, which is proposed for businessmen requiring mobile officing, usually going on business trips, and having demands for portability and roaming functions of the broadband account number, as well as other middle-high-end mobile people, for example, white-collars who rent lodging houses, undergraduates, etc. However, in the lodging houses, the dormitories, and rent houses, the turnover rate of people is rather high, so a MODEM for accessing the broadband network is not fixedly disposed. In this case, the mobile people require a portable broadband MODEM for broadband access on such locations, so as to conveniently get access to the network by using the personal broadband account number.

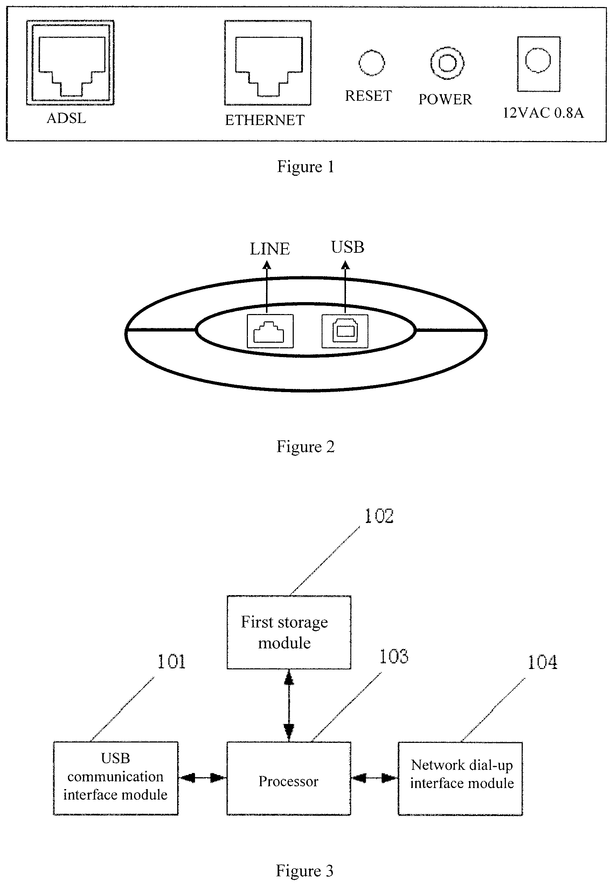

Recently, domestic subscribers commonly get access to the Internet through a broadband MODEM. Referring to Figure 1, a conventional broadband MODEM provides an Ethernet interface, a telephone line interface, and a power interface, and requires an external power adapter for performing normal operations. Because the power adapter is usually large in size and
weak in portability, the conventional broadband MODEM is merely suitable for the sites where the broadband MODEM is fixedly used, but it cannot meet the requirements of mobile subscribers. In addition, a broadband MODEM with a universal serial bus (USB) interface without an external power adapter has been proposed in today's market. Referring to Figure 2, such USB MODEM provides a USB interface and a telephone line interface. However, before using the USB MODEM, the subscriber needs to pre-install a driver for the USB MODEM in the s computer. Therefore, if the subscriber's computer is not equipped with an optical drive or the subscriber does not have a driver CD, it is impossible to get access to the Internet through the USB MODEM, which brings troubles to the subscribers.

WO 01/93048 A1 discloses a communications modem which can be interfaced to number of different channels. The modem comprises a controller having a computer memory associated therewith; software resident in said computer memory, said software comprising preloaded software drivers configured to support a plurality of PCMCIA cards; wherein upon insertion of a PCMCIA card, a proper software driver is automatically invoked, if said proper software driver is resident in said computer memory.

US 2005/278461 A1 discloses a method for installing software to operate a peripheral device on a computing device. The device drivers are stored in a non-volatile memory located on the device. Upon connecting the device to the computer, the computer recognizes the device and downloads and installs the device driver from the non-volatile memory on the device.

CN 1343917A discloses a method for adding additional memory function to peripherals of computer. Semiconductor storage device is added to various computer peripherals, and the storage device is readily identifiable and readable by a host computer.

### SUMMARY

In order to enable mobile subscribers to conveniently, quickly, and simply access network at a high speed at locations where an Internet access point exists, embodiments of the present invention provide a device with a built-in broadband dial-up function, which includes a USB communication interface module, a first storage module, a processor, and a network dial-up interface module.

The USB communication interface module is connected to a network terminal, and is adapted to realize an information interaction between the network terminal and Internet.

The first storage module is adapted to store a driver of the device.

The processor is adapted to install the driver of the device itself stored in the first storage module into the network terminal connected with the USB communication interface module of the device, and to analyze and process received data information, wherein the processor further comprises:
a detection unit, adapted to detect whether the driver of the device itself is installed into the network terminal connected with the USB communication interface module of the device or not through the USB communication interface module;
an automatic installation unit, adapted to read the driver of the device itself from the first storage module of the device and automatically install the driver of the device itself into the network terminal connected with the USB communication interface module of the device when an detection result of the detection unit is that the driver of the device itself is not installed in the network terminal connected with the USB communication interface module of the device; and
an analysis and processing unit, adapted to analyze and process requests of the network terminal and response information of the Internet, and to transmit a processing result to the network terminal or to the Internet outside the device.

The network dial-up interface module is connected between the processor and a telephone line, and adapted to get access to the Internet through the telephone line.

The beneficial effects of the technical solution provided in the embodiments of the present invention are described as follows:

The device provided by the embodiments of the present invention with a small volume is convenient to carry. And with low power consumption, an external power adapter is not needed. The device can also automatically install the driver thereof and has a data storage function, which brings conveniences to subscribers when using the device.

### BRIEF DESCRIPTION OF THE DRAWINGS

Figure 1 is a schematic structural view of an exterior of a conventional broadband MODEM in the prior art;
Figure 2 is a schematic structural view of an exterior of a USB MODEM in the prior art;
Figure 3 is a schematic structural view of a device with a built-in broadband dial-up function according to an embodiment of the present invention; and
Figure 4 is a schematic structural view of another device with a built-in broadband dial-up function according to an embodiment of the present invention.

### DETAILED DESCRIPTION

In order to make the objectives, technical solutions, and advantages of the embodiments of the present invention fully understood, a further description of the implementation manner of the embodiments of the present invention is given below by reference to the accompanying drawings.

Referring to Figure 3, an embodiment of the present invention provides a device with a built-in broadband dial-up function which includes a USB communication interface module 101, a first storage module 102, a processor 103, and a network dial-up interface module 104.

The USB communication interface module 101 is connected to a network terminal, and is adapted to realize an information interaction between the network terminal and Internet.

The first storage module 102 is adapted to store a driver of the device.

The processor 103 is adapted to install the driver of the device stored in the first storage module 102 in the network terminal, and to analyze and process received data information.

The network dial-up interface module 104 is connected between the processor 103 and a telephone line, and is adapted to get access to the Internet through the telephone line.

The USB communication interface module 101 may be realized by a USB2.0 connector. The device can be powered from the network terminal through the USB communication interface module 101. The network terminal may be a computer, a router, and the like. In this embodiment, the device with the built-in broadband dial-up function is, for example, connected to a computer.

The first storage module 102 is connected to the processor 103. In a practical application, the first storage module 102 may be realized by using a large-capacity FLASH component.

The network dial-up interface module 104 is connected to the telephone line through an RJ11 interface, and the network dial-up interface module 104 has an analog to digital (A/D) converting module therein, which is adapted to realize a conversion between a digital signal and an analog signal. In a practical application, the network dial-up interface module 104 may be an asymmetric digital subscriber line (ADSL) interface module, a rate adaptive ADSL (RADSL) interface module, a very high speed digital subscriber line (VDSL) interface module, a single digital subscriber line (SDSL) interface module, an integrated service digital network digital subscriber line (IDSL) interface module, or a high bit rate digital subscriber line (HDSL) interface module.

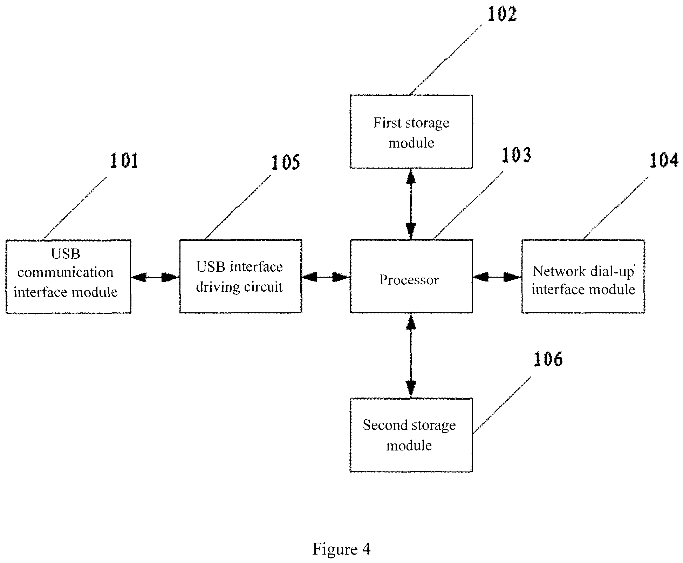

Further, referring to Figure 4, on the basis of the device shown in Figure 3, the device shown in Figure 4 may further include a USB interface driving circuit 105.

The USB interface driving circuit 105 is connected to the USB communication interface module 101 and the processor 103, and is adapted to realize an electrical performance matching between the USB communication interface module 101 and the processor 103.

The device may further include a second storage module 106.

The second storage module 106 is connected to the processor 103, and is adapted to store data information of a subscriber and a program that runs temporarily.

The second storage module 106 may be realized by a synchronous dynamic random access memory (SDRAM).

The processor 103 may further include a detection unit, an automatic installation unit, and an analysis and processing unit.

The detection unit is adapted to detect whether the driver of the device is installed in the computer or not through the USB communication interface module 101.

The automatic installation unit is adapted to read the driver of the device from the first storage module 102 and automatically install the driver of the device in the computer when a detection result of the detection unit is that the driver of the device is not installed in the computer.

The analysis and processing unit is adapted to analyze and process requests of the computer and response information of the Internet, and to transmit a processing result to the computer or to the Internet outside the device.

In addition, the automatic installation unit may be replaced by a triggering installation unit, which is adapted to trigger an operating system of the computer to read the driver of the device from the first storage module 102, and to automatically install the driver of the device in the computer, when an detection result of the detection unit is that the driver of the device is not installed in the computer.

The processor 103 may be a digital signal processor (DSP) in specific cases.

The device provided by the embodiments of the present invention has low power consumption, so that an external power adapter is not needed. Furthermore, the device with a small volume is convenient to carry, can also automatically install the driver of the device and has a data storage function, which brings conveniences to subscribers when using the device.

In practical applications, the device with the built-in broadband dial-up function provided by the embodiments of the present invention is formed by a shell and a circuit board installed in the device. Core components on the circuit board includes, but is not limited to, SL811 HS chips from Cypress, and IKE6505 chips and IKE6488 chips from IKANOS. After the subscriber connects the device to the USB interface of the computer and the telephone line respectively, the device automatically detects whether the corresponding driver thereof is installed in the computer or not. If the corresponding driver is not installed in the computer, the device installs the driver automatically. The device automatically dials up through a program stored in the second storage module 106. After dialing up successfully, the subscriber access the network via a web explorer.

It should be emphasized that the above-described embodiments, particularly, any 'preferred' embodiments, are merely possible examples of implementations, merely set forth for a clear understanding of the principles of the invention. Many variations and modifications may be made to the above-described preferred embodiment(s) without departing substantially from the principles of the invention. All such modifications and variations are intended to be included herein within the scope of this disclosure and the above-described preferred embodiment(s) and protected by the following claims.

## Claims

1. A device with a built-in broadband dial-up function, comprising:
a universal serial bus, USB, communication interface module (101), connected to a network terminal, and adapted to realize an information interaction between the network terminal and Internet;
a first storage module (102), adapted to store a driver of the device;
a processor (103), adapted to install the driver of the device itself stored in the first storage module (102) into the network terminal connected with the USB communication interface module (101) of the device, and to analyze and process received data information; and
a network dial-up interface module (104), connected between the processor (103) and a telephone line, and adapted to get access to the Internet through the telephone line, **characterized in that** the processor (103) further comprises:
a detection unit, adapted to detect whether the driver of the device itself is installed into the network terminal connected with the USB communication interface module (101) of the device or not through the USB communication interface module (101);
an automatic installation unit, adapted to read the driver of the device itself from the first storage module (102) of the device and automatically install the driver of the device itself into the network terminal connected with the USB communication interface module (101) of the device when an detection result of the detection unit is that the driver of the device itself is not installed in the network terminal connected with the USB communication interface module (101) of the device; and
an analysis and processing unit, adapted to analyze and process requests of the network terminal and response information of the Internet, and to transmit a processing result to the network terminal or to the Internet outside the device.

2. The device with a built-in broadband dial-up function according to claim 1, further comprising:
a USB interface driving circuit (105), connected to the USB communication interface module (101) and the processor (103), and adapted to realize an electrical performance matching between the USB communication interface module (101) and the processor (103).

3. The device with a built-in broadband dial-up function according to claim 1 or 2, further comprising:
a second storage module (106), connected to the processor (103), and adapted to store data information of a subscriber and a program that runs temporarily, wherein a storage medium of the second storage module (106) is a synchronous dynamic random access memory, SDRAM.

4. The device with a built-in broadband dial-up function according to one of the claims 1 to 3, wherein the USB communication interface module (101) is adapted to supply power to the device from the network terminal.

5. The device with a built-in broadband dial-up function according to one of the claims 1 to 4, wherein the USB communication interface module (101) is a USB2.0 connector.

6. The device with a built-in broadband dial-up function according to one of the claims 1 to 5, wherein the network dial-up interface module (104) is further adapted to connect to the telephone line through an RJ11 interface.

7. The device with a built-in broadband dial-up function according to one of the claims 1 to 6, wherein the network dial-up interface module (104) comprises an asymmetric digital subscriber line, ADSL, interface module, a rate adaptive ADSL, RADSL, interface module, a very high speed digital subscriber line, VDSL, interface module, a single digital subscriber line, SDSL, interface module, an integrated service digital network digital subscriber line , IDSL, interface module, or a high bit rate digital subscriber line, HDSL, interface module.

## Patentansprüche

1. Vorrichtung mit einer integrierten Breitband-Einwählfunktion, umfassend:
ein "Universal Serial Bus"-Kommunikationsschnittstellenmodul bzw. USB-Kommunikationsschnittstellenmodul (101), das mit einem Netzwerkendgerät verbunden ist und ausgelegt ist zum Umsetzen einer Informationsinteraktion zwischen dem Netzwerkendgerät und dem Internet;
ein erstes Speichermodul (102), das ausgelegt ist zum Speichern eines Treibers der Vorrichtung;
einen Prozessor (103), der ausgelegt ist zum Installieren des Treibers der Vorrichtung selbst, der im ersten Speichermodul (102) gespeichert ist, im Netzwerkendgerät, das mit dem USB-Kommunikationsschnittstellenmodul (101) der Vorrichtung verbunden ist, und zum Analysieren und zum Verarbeiten von empfangenen Dateninformationen; und
ein Netzwerk-Einwähl-Schnittstellenmodul (104) das zwischen dem Prozessor (103) und einer Telefonleitung verbunden ist und ausgelegt ist zum Zugrifferlangen zum Internet über die Telefonleitung, **dadurch gekennzeichnet, dass** der Prozessor (103) ferner Folgendes umfasst:
eine Detektionseinheit, die ausgelegt ist zum Detektieren, ob der Treiber der Vorrichtung selbst im Netzwerkendgerät, das mit dem USB-Kommunikationsschnittstellenmodul (101) der Vorrichtung verbunden ist, installiert ist oder nicht, durch das USB-Kommunikationsschnittstellenmodul (101);
eine Automatikinstallationseinheit, die ausgelegt ist zum Lesen des Treibers der Vorrichtung selbst vom ersten Speichermodul (102) der Vorrichtung und zum automatischen Installieren des Treibers der Vorrichtung selbst im Netzwerkendgerät, das mit dem USB-Kommunikationsschnittstellenmodul (101) der Vorrichtung verbunden ist, wenn ein Detektionsergebnis der Detektionseinheit lautet, dass der Treiber der Vorrichtung selbst nicht im Netzwerkendgerät, das mit dem USB-Kommunikationsschnittstellenmodul (101) der Vorrichtung verbunden ist, installiert ist; und
eine Analyse- und Verarbeitungseinheit, die ausgelegt ist zum Analysieren und Verarbeiten von Anfragen des Netzwerkendgeräts und von Rückmeldeinformationen des Internets und zum Übermitteln eines Verarbeitungsergebnisses zum Netzwerkendgerät oder zum Internet außerhalb der Vorrichtung.

2. Vorrichtung mit einer integrierten Breitband-Einwählfunktion nach Anspruch 1, ferner umfassend:
eine USB-Schnittstellenansteuerschaltung (105), die mit dem USB-Kommunikationsschnittstellenmodul (101) und dem Prozessor (103) verbunden ist und ausgelegt ist zum Umsetzen einer Anpassung der elektrischen Leistungsfähigkeit zwischen dem USB-Kommunikationsschnittstellenmodul (101) und dem Prozessor (103).

3. Vorrichtung mit einer integrierten Breitband-Einwählfunktion nach Anspruch 1 oder 2, ferner umfassend:
ein zweites Speichermodul (106), das mit dem Prozessor (103) verbunden ist und ausgelegt ist zum Speichern von Dateninformationen eines Teilnehmers und eines Programms, das temporär abläuft, wobei ein Speichermedium des zweiten Speichermoduls (106) ein synchroner dynamischer Direktzugriffsspeicher, SDRAM, ist.

4. Vorrichtung mit einer integrierten Breitband-Einwählfunktion nach einem der Ansprüche 1 bis 3, wobei das USB-Kommunikationsschnittstellenmodul (101) ausgelegt ist zum Versorgen der Vorrichtung mit Strom vom Netzwerkendgerät.

5. Vorrichtung mit einer integrierten Breitband-Einwählfunktion nach einem der Ansprüche 1 bis 4, wobei das USB-Kommunikationsschnittstellenmodul (101) ein USB2.0-Anschluss ist.

6. Vorrichtung mit einer integrierten Breitband-Einwählfunktion nach einem der Ansprüche 1 bis 5, wobei das Netzwerk-Einwähl-Schnittstellenmodul (104) ferner dazu ausgelegt ist, über eine RJ11-Schnittstelle mit der Telefonleitung verbunden zu werden.

7. Vorrichtung mit einer integrierten Breitband-Einwählfunktion nach einem der Ansprüche 1 bis 6, wobei das Netzwerk-Einwähl-Schnittstellenmodul (104) ein Schnittstellenmodul einer asymmetrischen digitalen Teilnehmerleitung bzw. ADSL-Schnittstellenmodul, ein Schnittstellenmodul einer ratenadaptiven ADSL bzw. RADSL-Schnittstellenmodul, ein Schnittstellenmodul einer digitalen Hochgeschwindigkeits-Teilnehmerleitung bzw. VDSL-Schnittstellenmodul, ein Schnittstellenmodul einer einzelnen digitalen Teilnehmerleitung bzw. SDSL-Schnittstellenmodul, ein Schnittstellenmodul einer digitalen Teilnehmerleitung eines dienstintegrierten digitalen Netzes bzw. IDSL-Schnittstellenmodul oder ein Schnittstellenmodul einer digitalen Teilnehmerleitung mit hoher Bitrate bzw. HDSL-Schnittstellenmodul umfasst.

## Revendications

1. Dispositif à fonction intégrée d'accès commuté à large bande, comprenant :
un module d'interface de communication de bus série universel, USB (101), connecté à un terminal de réseau, et adapté pour réaliser une interaction d'informations entre le terminal de réseau et l'Internet ;
un premier module de mémorisation (102), adapté pour mémoriser un pilote du dispositif ;
un processeur (103), adapté pour installer le pilote du dispositif proprement dit mémorisé dans le premier module de mémorisation (102) dans le terminal de réseau connecté au module d'interface de communication USB (101) du dispositif, et pour analyser et traiter les informations de données reçues ; et
un module d'interface d'accès commuté de réseau (104), connecté entre le processeur (103) et une ligne téléphonique, et adapté pour accéder à l'Internet par le biais de la ligne téléphonique, **caractérisé en ce que** le processeur (103) comprend en outre :
une unité de détection, adaptée pour détecter que le pilote du dispositif proprement dit est installé ou non dans le terminal de réseau connecté au module d'interface de communication USB (101) du dispositif par le biais du module d'interface de communication USB (101) ;
une unité d'installation automatique, adaptée pour lire le pilote du dispositif proprement dit à partir du premier module de mémorisation (102) du dispositif et installer automatiquement le pilote du dispositif proprement dit dans le terminal de réseau connecté au module d'interface de communication USB (101) du dispositif quand un résultat de détection de l'unité de détection est que le pilote du dispositif proprement dit n'est pas installé dans le terminal de réseau connecté au module d'interface de communication USB (101) du dispositif ; et
une unité d'analyse et de traitement, adaptée pour analyser et traiter des requêtes du terminal de réseau et des informations de réponse de l'Internet, et transmettre un résultat de traitement au terminal de réseau ou à l'Internet en dehors du dispositif.

2. Dispositif à fonction intégrée d'accès commuté à large bande selon la revendication 1, comprenant en outre :
un circuit de commande d'interface USB (105), connecté au module d'interface de communication USB (101) et au processeur (103), et adapté pour réaliser une adaptation de performance électrique entre le module d'interface de communication USB (101) et le processeur (103).

3. Dispositif à fonction intégrée d'accès commuté à large bande selon la revendication 1 ou 2, comprenant en outre :
un second module de mémorisation (106), connecté au processeur (103), et adapté pour mémoriser des informations de données d'un abonné et un programme qui est exécuté temporairement, dans lequel un support de mémorisation du second module de mémorisation (106) est une mémoire d'accès aléatoire dynamique synchrone, SDRAM.

4. Dispositif à fonction intégrée d'accès commuté à large bande selon l'une des revendications 1 à 3, dans lequel le module d'interface de communication USB (101) est adapté pour alimenter électriquement le dispositif depuis le terminal de réseau.

5. Dispositif à fonction intégrée d'accès commuté à large bande selon l'une des revendications 1 à 4, dans lequel le module d'interface de communication USB (101) est un connecteur USB2.0.

6. Dispositif à fonction intégrée d'accès commuté à large bande selon l'une des revendications 1 à 5, dans lequel le module d'interface d'accès commuté de réseau (104) est adapté en outre pour se connecter à la ligne téléphonique par le biais d'une interface RJ11.

7. Dispositif à fonction intégrée d'accès commuté à large bande selon l'une des revendications 1 à 6, dans lequel le module d'interface d'accès commuté de réseau (104) comprend un module d'interface de ligne d'abonné numérique asymétrique, ADSL, un module d'interface ADSL à débit adaptatif, RADSL, un module d'interface de ligne d'abonné numérique à très haut débit, VDSL, un module d'interface de ligne d'abonné numérique unique, SDSL, un module d'interface de ligne d'abonné numérique de réseau numérique à intégration de services, IDSL, ou un module interface de ligne d'abonné numérique à très haut débit, HDSL.
